Europäisches Patentamt

(19) European Patent Office

Office européen des brevets

(11) Numéro de publication: **0 116 984**

**A1**

(12) **DEMANDE DE BREVET EUROPEEN**

(21) Numéro de dépôt: 84200097.8

(22) Date de dépôt: 25.01.84

(51) Int. Cl.³: **F 16 K 7/10**
F 16 K 23/00, B 05 B 1/30

(30) Priorité: 27.01.83 LU 84610

(43) Date de publication de la demande:
29.08.84 Bulletin 84/35

(84) Etats contractants désignés:
IT

(71) Demandeur: Gentet, Clément
Chemin du Falourdeau
F-78750 Mareil Marly(FR)

(72) Inventeur: Gentet, Clément
Chemin du Falourdeau
F-78750 Mareil Marly(FR)

(74) Mandataire: van Malderen, Michel et al,
p.a. FREYLINGER & ASSOCIES 85/042 Boulevard de la
Sauvenière
B-4000 Liège(BE)

(54) Dispositif de fermeture de buses muni d'un moyen d'accrochage de buses pour rampe de pulvérisation ou d'épandage.

(57) Dispositif de fermeture de buses constitué par un conduit principal (2) traversé perpendiculairement par un tuyau souple (6) gonflable à l'air comprimé pour obturer le passage du liquide de pulvérisation. Le dispositif peut consister en deux conduits globalement orthogonaux permettant une fixation étanche d'un tuyau souple (6) dans un des conduits, l'autre conduit servant de conduit principal pour le liquide de pulvérisation. L'extrémité portant le dispositif d'épandage peut consister en une fixation de la buse par accrochage élastique d'un support de buse.

FIG.1

EP 0 116 984 A1

Dispositif de fermeture de buses muni d'un moyen d'accrochage de buses pour rampe de pulvérisation ou d'épandage.

La présente invention concerne un dispositif de fermeture de buses dit "antigoutte" pouvant être monté sur des rampes comportant une pluralité de buses de pulvérisation ou d'épandage alimentées par une conduite reliée à un réservoir contenant sous forme liquide le produit à distribuer et comportant une pompe assurant la circulation de ce liquide et un moyen d'accrochage de buses.

Dans le cas de l'épandage ou de la pulvérisation d'engrais, de pesticides etc., un problème important réside dans la difficulté d'obtenir une fermeture immédiate des buses lorsque l'opérateur désire interrompre l'alimentation des buses. On sait qu'une distribution régulière des produits de traitement est de grande importance, d'une part pour assurer une distribution minimale assurant l'efficacité souhaitée et d'autre part pour éviter un surdosage qui provoquerait des brûlures et autres dégâts (retard de croissance) aux cultures. Plusieurs solutions ont déjà été proposées par différents constructeurs de matériel agricole. Ainsi, on connaît un dispositif équipé d'un clapet à ressort taré entrant en action dès que la pression du produit à épandre devient inférieure à la pression du ressort. Cependant, l'entrée en action des clapets intervient dans la majeure partie des cas avec un certain retard par rapport à la commande de l'opérateur.

D'autres dispositifs travaillent au moyen d'une commande de fermeture de vanne à air comprimé. Ainsi, on connaît des dispositifs antigoutte comportant deux chambres étanches délimitées par une membrane souple, l'une des deux chambres recevant le produit à épandre, tandis que l'autre est remplie d'un fluide, qui porté à haute pression empêche le passage du liquide à épandre dans la buse en obturant un orifice au moyen de ladite membrane (voir FR-A-2.151.711 et FR-A-2.290.254 - LESTRADET).

Ce dispositif présente cependant l'inconvénient d'être très compliqué et coûteux, étant donné la nécessité de réaliser des chambres étanches aux hautes pressions et de disposer d'une membrane résistant à l'agressivité des divers produits à pulvériser. La solution de l'état de la technique comporte également une déviation pratiquement en angle droit du courant de liquide, entraînant des pertes de charges non négligeables.

Enfin, par le document DE-C-1 035 435 (RHEINISCHES METALLWERKE), on connaît un dispositif de fermeture auxiliaire pour soupapes de forage qui permettent d'accéder à un conduit sous pression sans pour autant couper la pression de gaz ou de liquide régnant dans le conduit ou vider le conduit en question.

Ce dispositif consiste essentiellement en un doigt muni d'un alésage qui est entouré, au moins sur la longueur correspondant à l'ouverture à obturer, d'une coiffe en caoutchouc qui peut être mise sous pression en vue d'assurer la fermeture de l'ouverture de passage.

Le fonctionnement du dispositif nécessite un montage dudit doigt sur le corps de la vanne, un vissage manuel dans un taraudage pour assurer l'étanchéité à l'extrémité du doigt, avant d'actionner l'obturation par mise sous pression.

Ce document se distingue de la présente invention par le fait que le but, c'est-à-dire l'utilisation, en est totalement différent. Le document cité ne vise pas un système d'obturation rapide (anti-goutte) pour des buses de pulvérisation et n'est pas transposable à des rampes de pulvérisation qui peuvent avoir des portées jusqu'à 36 mètres en comportant deux buses de pulvérisation par mètre courant, montées en série et alimentées par une conduite nourricière à circulation continue en circuit fermé.

La construction obtenue dans le document cité résulte de la fonction à remplir, à savoir étanchéité mais également retractabilité du dispositif auxiliaire.

Même une combinaison des différents documents précités ne permet pas de réaliser l'invention faisant l'objet du présent mémoire descriptif et des revendications sans exercer une activité inventive.

La présente invention a donc pour but de surmonter les inconvénients précités en fournissant un nouveau dispositif antigoutte présentant une efficacité au moins aussi bonne que les solutions de l'état de la technique qui est cependant de conception très simple, facile à construire et robuste pour résister à toutes les sollicitations auxquelles sont soumis les dispositifs de ce genre dans les usages agricoles et autres.

Le but de la présente invention est atteint par un dispositif de fermeture de buse simple, entrant en action aussitôt que l'opérateur le commande, caractérisé en ce qu'il comporte un conduit principal alimenté à une extrémité par le conduit d'alimentation relié à un réservoir et muni, à l'autre extrémité, du dispositif de pulvérisation ou d'épandage, le conduit principal étant croisé par un conduit secondaire ne communiquant pas avec lui, consistant en un tuyau flexible et gonflable qui obture le conduit principal lorsqu'on gonfle le conduit secondaire au moyen d'un fluide sous pression.

Le dispositif ainsi conçu permet d'obturer de manière efficace les buses de pulvérisation en jouant le rôle d'une vanne. Il trouve son application dans tous les dispositifs d'épandage de liquide par buse de pulvérisation et n'est pas limité aux domaines agricoles, d'autres applications par exemple forestières, de désherbage de routes ou bas-côtés etc. pouvant être envisagées.

Suivant un mode d'exécution préféré de l'invention, le dispositif est constitué d'une pièce à deux conduits globalement orthogonaux communiquants . Le conduit principal est adapté pour s'engager dans la conduite d'alimentation d'une part, et pour recevoir la buse de pulvérisation d'autre part, le conduit secondaire étant gainé par un tuyau souple traversant le conduit de part en part sans l'obturer tout en étant engagé de manière étanche dans le conduit secondaire et alimenté en un fluide sous pression pour obturer le conduit principal.

Avantageusement, le raccordement étanche du tuyau souple dans le conduit secondaire est assuré par un tube ou une gaine souple prise à au moins une extrémité entre un tube rigide intérieur et une gaine semi-rigide extérieure sertie par un raccord bicône, le tube ou la gaine souple traversant le conduit de part en part et le tube rigide étant adapté pour recevoir à son extrémité libre sortant du dispositif, le conduit d'alimentation en fluide sous pression.

Lorsque le tuyau souple est gonflé sous l'action d'un fluide sous pression, il obture le passage du liquide du conduit principal vers la buse. Lorsqu'on diminue la pression, il reprend sa forme initiale et le liquide peut s'écouler vers la buse.

Les tubes rigides peuvent comporter des raccordements instantanés pour permettre l'alimentation et l'interconnexion de plusieurs dispositifs en série, par exemple.

On constate que le dispositif de la présente invention est simple et peu coûteux puisqu'il peut utiliser des éléments existant déjà sur le marché tels que des raccords universels et instantanés produits par différentes firmes.

De préférence, ledit fluide sous pression est de l'air comprimé. Le tube souple est avantageusement constitué par une matière plastique souple ou un caoutchouc résistant aux produits agressifs.

Il faut cependant veiller à utiliser une gaine souple maintenant toutes ses caractéristiques de souplesse et d'étanchéité après de nombreuses utilisations dans le milieu généralement agressif constitué par les produits à pulvériser ou à épandre.

On a constaté que généralement, pour obtenir un effet antigoutte efficace, il faut gonfler une telle gaine souple pour des buses travaillant à environ 3 bars par une pression supérieure de 3 bars au moins à la pression du liquide à pulvériser ou à épandre.

Généralement, on recourt à une pression d'air comprimé de l'ordre de 7 bars.

La présente invention sera décrite plus en détail au moyen des figures annexées dans lesquelles:

- la figure 1 représente un dispositif de fermeture suivant l'invention en demi-coupe;
- la figure 2 représente, à une échelle agrandie, un moyen d'accrochage de buse particulier;
- la figure 3 représente un autre mode d'exécution du dispositif de l'invention, et
- la figure 4 représente un troisième mode d'exécution.

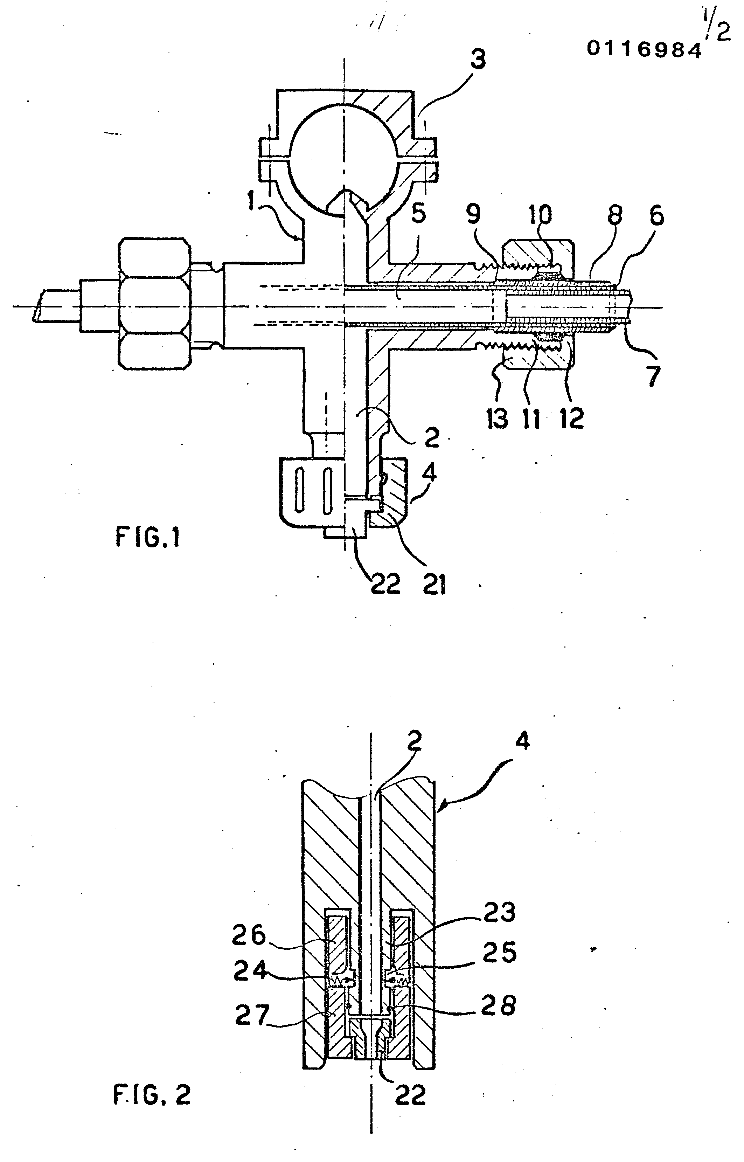

Suivant la figure 1, le dispositif consiste essentiellement en une pièce en forme de croix 1. Le conduit principal 2 comporte des extrémités 3, 4 dont l'une est adaptée pour être raccordée à la conduite d'alimentation (non représentée) par un collier et l'autre est munie du dispositif de distribution qui est généralement une buse ou un ajutage de pulvérisation. Avantageusement, on peut utiliser une buse disponible dans le commerce, par exemple une buse mono-jet ou une buse quadri-jet.

Dans le cas de la figure, un corps de buse 21 contenant une seule buse 22 est fixé sur le dispositif de l'invention au moyen d'un raccordement rapide par exemple, un raccordement dit "à baïonnette".

Suivant la figure 1, le dispositif comporte également un conduit secondaire 5 dans lequel est introduite une gaine ou tube souple 6 traversant le conduit principal 2. Le diamètre extérieur du tube souple 6 est légèrement inférieur au diamètre du conduit 5 afin de permettre le passage du liquide à pulvériser, entre le tube 6 et la paroi intérieure du conduit 2.

Aux deux extrémités du tube souple 6, est introduit un tube rigide 7, par exemple en laiton, qui est alimenté en air comprimé. Aux mêmes endroits, un tube semi-rigide 8 est glissé sur le tube souple 6 de manière à s'engager à butée contre l'épaulement 9 dans le raccord bicône 1. Une bague 10 de section biconique et emmanchée sur le tube semi-rigide est coïncée entre l'extrémité 11 du raccord bicône et la paroi intérieure de l'écrou creux 13. Etant donné la conception des surfaces de serrage, la bague 10 écrase le tube semi-rigide 8 et le tube 6 contre le tube rigide 7. Ainsi, il ne peut se produire aucune fuite de liquide entre le tube souple 6 et le tube semi-rigide 8. Comme l'écrou 13 applique également le tube semi-rigide 8 contre l'épaulement 9 du raccord bicône, la matière semi-rigide du tube 8 y forme un joint empêchant ainsi le passage du liquide à pulvériser vers l'extérieur.

On constate donc que la conception du dispositif de fermeture de buses de la présente invention est simple et qu'il peut être constitué d'éléments produits en grande série et facilement disponibles sur le marché.

Le dispositif peut consister en un matériau synthétique rigide moulé sous pression. Il peut également consister en un matériau rigide par exemple du laiton, pour les raccords bicône et en un matériau synthétique pour le conduit principal pour les raccordements à la rampe et pour la fixation des buses. L'assemblage des deux éléments en matériaux distincts peut être effectué par vissage; il peut également consister en un surmoulage de l'élément en laiton par une matière synthétique.

En se référant à la figure 2, on note que l'extrémité 4 du dispositif de l'invention est représentée à une échelle agrandie. Cette extrémité comporte le conduit principal 2 dont la paroi 23 est munie d'une encoche périphérique 25. La buse 22 est solidaire de l'élément de fixation 27 asemblé à l'élément 26 par vis ou par rivets; les deux éléments sont écartés par une rondelle métallique supportant un ressort 24 qui permet l'engagement d'ergots dans ladite encoche 25. La buse accrochée au dispositif de fermeture est positionnée correctement au moyen de rainures disposées longitudinalement dans la partie supérieure de la paroi 23 du conduit principal 2. L'élément 26 est muni d'ergots ou d'autres moyens de guidage permettant de positionner l'ensemble 26 - 27 - 22 correctement.

L'étanchéité du dispositif est assurée par un joint torrique 28 qui empêche que le liquide à pulvériser contourne le moyen d'accrochage de la buse. Pour permettre d'écarter les ergots de fixation de manière à pouvoir décrocher la buse 22, par exemple pour la remplacer, le ressort 24 sera apparent assurant ainsi le décrochage à la main et/ou au moyen d'un outil adapté.

Ce dispositif présente l'avantage de permettre une substitution rapide d'une buse par une autre.

Le dispositif de fermeture de la présente invention présente l'avantage par rapport aux dispositifs connus de ne pas nécessiter de chambre et de ne pas modifier essentiellement la direction du liquide à pulvériser ou à épandre, ce qui diminue de manière importante les pertes de charges dans le circuit de liquide de pulvérisation, réduit l'usure du dispositif et réduit surtout l'encrassement résultant du dépôt des matières en suspension, en émulsion ou en solution dans le liquide.

En prévoyant un circuit d'alimentation en air comprimé adéquat, l'opérateur peut commander à distance la fermeture de chaque pulvérisateur séparément ou de deux, trois pulvérisateurs ou plus d'une section de rampes, en même temps.

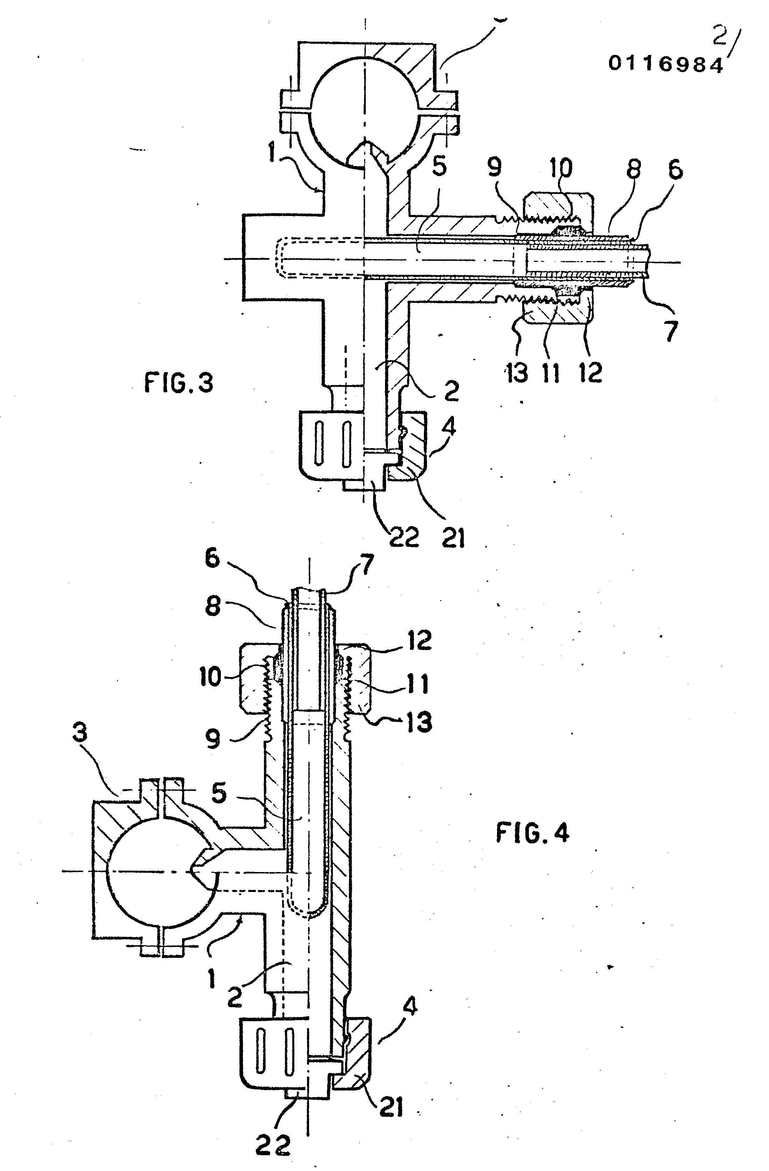

Dans le mode d'exécution de la figure 3, le tube souple 6 destiné à obturer le conduit principal 2 présente une extrémité en forme de doigtier qui aboutit au fond du conduit 5 obturé par un bouchon, par exemple, ou en cul de sac.

En se référant à la figure 4, on constate que le liquide de pulvérisation subit une modification de direction en suivant le conduit principal 2. Le conduit secondaire 5 aboutit dans ledit conduit 2 à l'endroit de l'angle formé par les deux branches du conduit principal. La fermeture est assurée par le tube souple 6 dont l'extrémité est en forme de doigtier et qui aboutit dans le conduit principal 2 se terminant par la buse.

Etant donné la conception simple et l'assemblage facile des éléments, tout remplacement d'un élément usé est peu coûteux.

De par sa conception, le dispositif de fermeture de l'invention présente encore l'avantage qu'il est possible de maintenir une circulation et un recyclage continu du liquide de pulvérisation dans la rampe, vers le réservoir et ensuite à nouveau du réservoir vers la rampe, même lorsque la pulvérisation est totalement ou partiellement interrompue. De cette manière, la formation de dépôts dans les conduits traversés par le liquide est encore réduite.

Contrairement aux dispositifs connus, le dispositif d'accrochage de buse décrit permet suivant l'invention, une protection complète du support de buse par l'extrémité particulière 4 du dispositif de fermeture de buse.

Du fait que les figures annexées et les descriptions correspondantes relèvent d'un mode d'exécution préféré de l'invention, celle-ci ne doit bien entendu pas être limitée à ce mode d'exécution et elle couvre également toutes modifications entrant dans son cadre.

Revendications.

1. Dispositif de fermeture de buse simple entrant en action aussitôt que l'opérateur le commande, caractérisé en ce qu'il comporte un conduit principal (2) alimenté à une extrémité (3) par le conduit d'alimentation relié à un réservoir et muni à l'autre extrémité (4) du dispositif de pulvérisation ou d'épandage, le conduit principal (2) étant croisé par un conduit secondaire (6) ne communiquant pas avec lui consistant en un tuyau flexible et gonflable (6) qui obture le conduit principal (2) lorsqu'on gonfle le conduit secondaire au moyen d'un fluide sous pression.

2. Dispositif suivant la revendication 1, caractérisé en ce qu'il est constitué d'une pièce à deux conduits globalement orthogonaux communiquants dont le conduit principal (2) est adapté pour s'engager dans la conduite d'alimentation, d'une part, et pour recevoir la buse de pulvérisation, d'autre part, le conduit orthogonal (5) étant gainé par un tuyau souple (6) traversant le conduit (2) de part en part sans l'obturer tout en étant engagé de manière étanche dans le conduit secondaire (5) et alimenté en un fluide sous pression.

3. Dispositif suivant la revendication 1, caractérisé en ce qu'il est constitué d'une pièce qui comporte un conduit principal (2) pour le passage du liquide, le conduit (2) présentant une modification de direction, et un conduit secondaire (5) aboutissant dans le conduit (2) à l'angle formé par ses deux branches, le conduit (5) étant gainé par un tuyau souple (6) engagé de manière étanche dans le conduit secondaire et aboutissant en forme de doigtier dans une des branches du conduit (2) pour obturer celui-ci, lorsqu'il est alimenté en un fluide sous pression.

4. Dispositif suivant l'une des revendications précédentes, caractérisé en ce que le raccordement

0116984

étanche du tuyau souple (6) dans le conduit secondaire (5) est assuré par un tube en une gaine souple (6) prise à au moins une extrémité entre un tube rigide intérieur (7) et une gaine semi-rigide extérieure (8) sertie par un raccord bicône, le tube ou la gaine souple (6) traversant le conduit (2) de part en part et le tube rigide (7) étant adapté pour recevoir, à son extrémité libre sortant du dispositif, le conduit d'alimentation en fluide sous pression.

5. Dispositif suivant l'une des revendications précédentes, caractérisé en ce que le dispositif de pulvérisation ou d'épandage fixé au conduit principal (2) consiste en une buse quadri-jet.

6. Dispositif suivant l'une des revendications 1 à 4 caractérisé en ce que le dispositif de pulvérisation ou d'épandage consiste en un corps de buse (21) mono-jet fixé au dispositif de fermeture (1) au moyen d'un raccordement rapide.

7. Dispositif suivant l'une des revendications 1 à 4, caractérisé en ce que le dispositif de pulvérisation ou d'épandage comporte une extrémité inférieure (4) dont la paroi (23) du conduit principal (2) est munie d'une encoche périphérique (25) permettant l'engagement d'un ergot sous l'action d'un ressort pour accrocher l'ensemble (26, 27) support de buse (22).

8. Dispositif suivant la revendication 7, caractérisé en ce que le positionnement correct de la buse (22) est effectué au moyen de rainures dans la paroi (23) du conduit principal (2) et de moyens de guidage pratiqués dans l'élément (26) support de buse (22) et s'engageant dans lesdites rainures.

9. Dispositif suivant l'une des revendications précédentes, caractérisé en ce que le tube souple (6) est constitué par une matière plastique souple ou un caoutchouc résistant aux produits agressifs.

10. Dispositif suivant l'une quelconque des revendications précédentes, caractérisé en ce que le fluide sous pression est de l'air comprimé.

11. Dispositif suivant l'une quelconque des revendications précédentes, caractérisé en ce qu'on recourt à une pression d'air comprimé de l'ordre de 7 bars.

FIG.1

FIG. 2

FIG.3

FIG.4

0116984

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,Y | DE-C-1 035 435  (RHEINISCHES METALLWERK) <br> * Colonne 3, lignes 41-70; colonne 4; figure 1 * | 1,10 | F 16 K    7/10 <br> F 16 K   23/00 <br> B 05 B    1/30 |
| A | | 4,9 | |
| | --- | | |
| D,Y | FR-A-2 290 254  (LESTRADET) <br> * Page 2, paragraphes 5,6; page 3; page 4; figure s 1-3 * | 1,10 | |
| A | | 5 | |
| | --- | | |
| A | GB-A-2 030 474  (DORMAN) | | |
| | --- | | |
| A | US-A-3 684 177  (BARLOW) | | |
| | --- | | |
| A | FR-A-1 053 752  (ULLRICH) <br> * Page 2, colonne de gauche, paragraphes 7,8,9; colonne de droite, paragraphe 1; figures 1-4 * | 1,9 | |
| A | FR-A-1 336 067  (SOC. VERRERIES DU LOING) <br> * Page 1, colonne de droite, paragraphes 6,7; page 2; page 3, colonne de gauche; figures 1-5 * | 1,3 | |
| | ---           -/- | | |

DOMAINES TECHNIQUES RECHERCHES (Int. Cl. 3)

B 05 B
F 16 K
A 01 M

~~Le présent rapport de recherche a été établi pour toutes les revendications~~

| Lieu de la recherche | Date d'achèvement de la recherche | Examinateur |
|---|---|---|
| LA HAYE | 23-05-1984 | VERMANDER R.H. |

Office européen

des brevets

| X | **REVENDICATIONS DONNANT LIEU AU PAIEMENT DE TAXES** |

La présente demande de brevet européen comportait lors de son dépôt plus de dix revendications.

☐ Toutes les taxes de revendication ayant été acquittées dans les délais prescrits, le présent rapport de recherche européenne a été établi pour toutes les revendications.

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées.

à savoir les revendications:

☒ Aucune taxe de revendication n'ayant été acquittée dans les délais prescrits, le présent rapport de recherche européenne a été établi pour les dix premières revendications.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions,
à savoir:

☐ Toutes les nouvelles taxes de recherche ayant été acquittées dans les délais impartis, le présent rapport de recherche européenne a été établi pour toutes les revendications.

☐ Une partie seulement des nouvelles taxes de recherche ayant été acquittée dans les délais impartis, le présent rapport de recherche européenne a été établi pour les parties de la demande de brevet européen qui se rapportent aux inventions pour lesquelles les taxes de recherche ont été acquittées

à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications,

à savoir les revendications:

Office européen
des brevets

**RAPPORT DE RECHERCHE EUROPEENNE**

**0116984**
Numéro de la demande

EP   84 20 0097

| | **DOCUMENTS CONSIDERES COMME PERTINENTS** | | Page   2 | |
|---|---|---|---|---|
| Catégorie | Citation du document avec indication, en cas de besoin, des parties pertinentes | Revendication concernée | CLASSEMENT DE LA DEMANDE (Int. Cl. 3) |
| A | BE-A-   474 638   (BALSTAHL) | | |
| A | US-A-3 890 994   (OLSEN) | | |

DOMAINES TECHNIQUES
RECHERCHES (Int. Cl. 3)

~~Le présent rapport de recherche a été établi pour toutes les revendications~~

| Lieu de la recherche | Date d'achèvement de la recherche | Examinateur |
|---|---|---|
| LA HAYE | 23-05-1984 | VERMANDER R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                                         

& : membre de la même famille, document correspondant

OEB Form 1503. 03.82